# EUROPEAN PATENT SPECIFICATION

(11) **EP 2 159 389 B1**
(45) Date of publication and mention of the grant of the patent: **25.01.2012**
(21) Application number: 08163299.4
(22) Date of filing: 29.08.2008
(51) Int. Cl.: F01N 3/20

(54) **Ventilation system for after-treatment compartment**
Belüftung einer Abgasnachbehandlung
Système de ventilation pour compartiment de post-traitement

(43) Date of publication of application: 03.03.2010
(73) Proprietor: CATERPILLAR INC., Peoria IL 61629-6490 (US)
(72) Inventor: Prost, Frederic, Peoria, IL 61629-6490 (US); Bicrel, Christophe, Peoria, IL 61629-6490 (US); Previeux, Nicolas, Peoria, IL 61629-6490 (US)
(74) Representative: Modiano, Micaela Nadia

(56) References cited:
- DE-A1- 3 939 391
- DE-A1- 10 206 066
- US-A- 3 820 327

## Description

### Technical Field

This disclosure generally relates to the field of engine exhaust after-treatment devices, particularly, to ventilation systems for cooling exhaust after-treatment compartments and methods therefor, and to engineering vehicles comprising said ventilation systems and methods.

### Background

During operation of a combustion engine in a vehicle, exhaust may be generated. Generally, the temperature of the exhaust emitted from the engine may depend on various factors. The temperature of the exhaust, in normal operation, may typically depend on speed and engine load. Pressure and ambient temperature may also be factors affecting the exhaust temperature. For instance, during idle operation, the temperature of the exhaust may be low while at conditions of high loading the temperature of the exhaust may be high.

The exhaust may contain chemical by-products. The by-products in the exhaust may be treated by use of various known technologies that may purify the exhaust discharged from an engine. Treatment, or after-treatment, may concern a process of treating exhaust generated during the operation of an engine prior to its release to the environment. Treatment may involve using an exhaust after-treatment device installed in an exhaust passage.

An engine may be connected to an exhaust pipe, which may carry the exhaust away from the engine. The exhaust pipe may also carry an after-treatment device. An after- treatment device may include diesel particulate filters (DPF) that may capture particulate matter (PM) discharged from diesel engines or nitrogen oxides (NOx) trapping catalytic converters that may trap NOx contained in the exhaust when the air fuel ratio of the exhaust gas is lean.

During operation, a DPF may continuously capture particulate matter and it may be eventually clogged. Similarly, a NOx trapping catalytic converter may become contaminated with sulphur over time due to the release of sulphur by-products. Therefore, the DPF may need to be regenerated by raising the temperature of the exhaust in order to burn off the accumulated particulate matter. Similarly, the NOx trapping catalytic converter may be regenerated by raising the temperature of the exhaust in order to remove the sulphur.

Hence, the addition of an after-treatment device may increase the temperature of the exhaust at idle operation or further increase the temperature of the exhaust during high loading in order to burn off captured or trapped by-products.

Accordingly, there is a need for a system of reducing the temperature in an after-treatment compartment during operation of a vehicle. Due to the high temperatures, connecting a cooling fan system in the after-treatment compartment may not be feasible.

The present disclosure is directed, at least in part, to improving or overcoming one or more aspects of the prior art systems as shown for example in DE 10206066 or US 3820327.

### Brief Summary of the Invention

In a first aspect, the present disclosure describes a ventilation system comprising an engine compartment having a first port; an after-treatment compartment having a second port; a conduit connected between the first and second ports; and an air pressure differential between the engine compartment and the after-treatment compartment to generate an air flow through the conduit.

In a second aspect, the present disclosure describes a method of ventilating an after-treatment compartment comprising: connecting a conduit between a first port on an engine compartment and a second port on the after-treatment compartment and forming a pressure differential between the engine compartment and the after-treatment compartment to generate an air flow through the conduit.

Other features and advantages of the present disclosure will be apparent from the following description of various embodiments, when read together with the accompanying drawings.

### Brief Description of the Drawings

The foregoing and other features and advantages of the present disclosure will be more fully understood from the following description of various embodiments, when read together with the accompanying drawings, in which:
Fig. 1 is a schematic representation of a first embodiment of a ventilation system according to the present disclosure;
Fig. 2 is a schematic representation of a second embodiment of a ventilation system according to the present disclosure.

### Detailed Description

This disclosure generally relates to systems and methods for regulating air flow in an after-treatment device compartment of a vehicle.

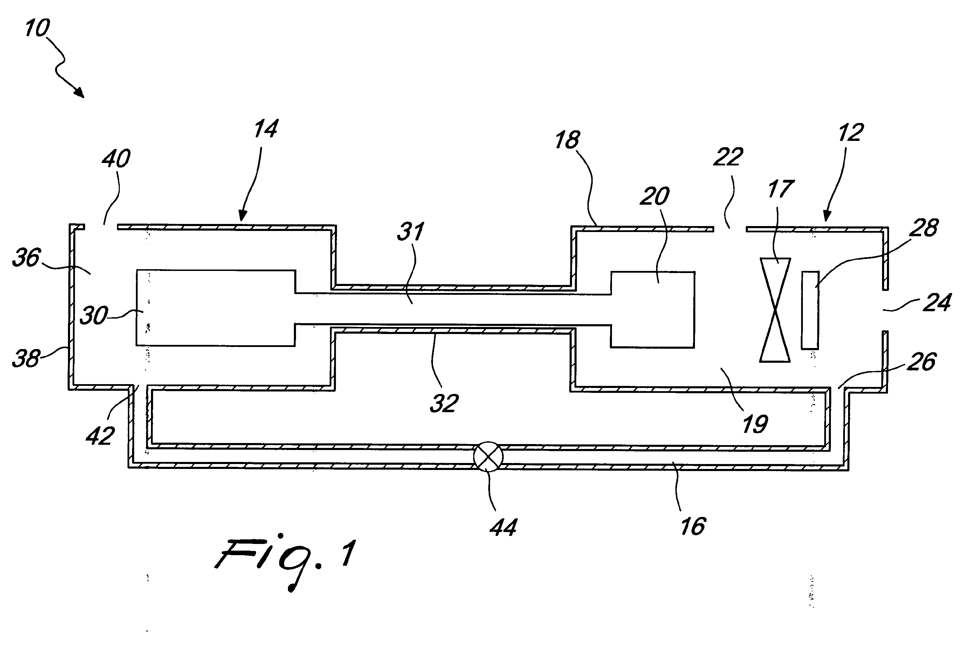

Fig. 1 illustrates a ventilation system **10** according to the present disclosure. The ventilation system **10** of the present disclosure may comprise an engine compartment **12,** an after-treatment compartment **14,** a conduit **16** and a fluid circulator **17,** as will be described hereinafter.

The engine compartment **12** may be bound by walls **18.** The walls **18** of the engine compartment **10** may be of any suitable material and shape as required to fit into a machine, for instance an engineering vehicle or an industrial machine. An engine **20** may be located in any suitable position within engine compartment **12.**

An air passage **19** may be formed within the interior of the engine compartment **10.** Air passage **19** may be enclosed by walls distinct from the walls **18.** In an embodiment, the air passage **19** may be encompassed by walls **18.**

Walls **18** may have at least one opening to allow the interior of the engine compartment **12** to communicate with air space external to the engine compartment **12** by allowing passage of air into and out of the engine compartment **12.**

In an embodiment, there may be at least two openings. A first opening may be an inlet **22** for entry of ambient air into the engine compartment **12** and a second opening may be an outlet **24** for exit of circulated air from the engine compartment **12.** In another embodiment, the engine compartment **12** may have a plurality of inlets **22** and/or a plurality of outlets **24.**

Walls **18** may also have a port **26.** Any suitable connection may be provided at **port 26** to enable connection of the engine compartment **12** to the conduit **16.** An end of conduit **16** may be suitably configured for connection to the correspondingly configured port **26.** For instance, there may be screws, welding or a clamp connections. The interior of.the engine compartment **12** may communicate with the conduit **16** through port **26** such that air may flow from the conduit **16** into the engine compartment **12** or air may flow from the engine compartment **12** to the conduit 26.

The inlet **22,** the outlet **24** and the port **26** may be formed on any wall **18** or may be in any suitable position on a wall **18** of the engine compartment **10.** For instance, the inlet **22,** the outlet **20** and the port **26** may be formed on the same wall **18.** In an embodiment, the inlet **22,** outlet **20** and port **26** may be formed on distinct walls **18.**

The engine compartment **12** may further comprise the fluid circulator **17** to produce an air current in the air passage **19.** Ambient air may be forced into the interior of the engine compartment **12** through inlet **22** by the fluid circulator **17.** Fluid circulator **17** may also circulate the air in the air passage **19** before the air exits through the outlet **24.** The fluid circulator **17** may be suitably provided as required. For instance, the fluid circulator **17** may be an air intake formed over the inlet **22** wherein the movement of the machine, such as a vehicle, forces ambient air through inlet **22,** thereby producing an air current that may circulate through the air passage **19** and may exit at outlet **24.**

In an embodiment, the fluid circulator **17** may be a fan wherein rotation of the fan may produce an air current which may draw ambient air in through the inlet **22,** drive circulation of the air through the air passage **19** and force air out of through the outlet **24.** The fan may be directly connected to the engine **20** such that the fan may be driven at the engine speed, or a mechanical clutch may be provided between the fan and the engine to vary the speed of the fan. In a further embodiment, the fluid circulator **17** may be a hydraulic demand fan wherein the fan is connected to a hydraulic motor. The fan may be positioned near or at the outlet **24.**

The engine compartment **12** may further comprise a heat core **28** located in the air passage **19.** The heat core **28** may generally comprise cooling mechanisms, for instance a heat exchanger, which in turn may comprise a fluid that may circulate through engine components and absorb heat therefrom. The heat exchanger may enable transfer of heat from the heated fluid to the surrounding air. Air circulating through the air passage **19** may absorb heat from the heat core **28** prior to exiting through outlet **24.**

The after-treatment compartment **14** may comprise after-treatment components or device **30.** The after treatment device **30** may be connected to the engine **20** by a pipe **31.** Exhaust from the engine **30** is transmitted through pipe **31** to the after-treatment device **30.** The after-treatment compartment **14** may be connected to the engine compartment **12** by a channel **32** housing the pipe **31.** In an embodiment, the after-treatment compartment **14** may be sealed from the engine compartment **12.**

The after-treatment compartment **14** may be bound by walls **38.** The walls **38** of the after-treatment compartment **14** may be of any suitable material and shape as required to fit into a machine, for instance an engineering vehicle or an industrial machine.

An air chamber **36** may be formed within the interior of the after-treatment compartment **14.** Air chamber **36** may be enclosed by walls distinct from the walls **38.** The after-treatment device **30** may be positioned in the air chamber **36.** In an embodiment, the air chamber **36** may be encompassed by walls **38.**

Walls **38** may have an aperture **40** to allow the interior of the after-treatment compartment **14** to communicate with air space external to the after-treatment compartment **14.** Aperture **40** may allow flow of air into and out of the air chamber **36** of the after-treatment compartment **14.**

Walls **38** may also have a port **42.** Any suitable connection may be provided at port **42** to enable connection of the after-treatment compartment **14** to the conduit **16.** The opposite free end of conduit **16** may be suitably configured for connection to the correspondingly configured port **42.** For instance, there may be one or more screws, welding or clamp connections.

The aperture **40** and the port **42** may be formed on any wall **38** or may be in any suitable position on a wall **38** of the after-treatment compartment **14.** For instance, the aperture **40** and the port **42** may be formed on the same wall **38.** In an embodiment, the aperture **40** and the port **42** may be formed on distinct walls **38** such that the after-treatment device **30** may be positioned in the air chamber **36** between the aperture **40** and the port **42.**

The interior of the after-treatment compartment **14** may communicate with the conduit **16** through port **42** such that air may flow from the conduit **26** into the air chamber **36** of the after-treatment compartment **14** or air may flow from air chamber **36** of the after-treatment compartment **14** to the conduit **26.**

The aperture **40** may function as a point of entry of ambient air into the after-treatment compartment **14** and the port **42** may function as outlet **24** for exit of circulated air from the after-treatment compartment **14.** In an another embodiment, the port **42** may function as a point of entry of air from the conduit **16** into the after-treatment compartment **14** and the aperture **40** may function as a point exit of circulated air from the after-treatment compartment **14.**

The conduit **16** may have an end connected to the engine compartment **12** at port **16** and the other end connected to the after-treatment compartment **14** at port **42.** Conduit **16** may enable communication between the engine compartment **12** and the after-treatment compartment **14.** Air from the engine compartment **12** may flow through the conduit **16** into the after-treatment compartment **14** or air from the after-treatment compartment **14** may flow through the conduit **16** into engine compartment **12.** Conduit **16** may comprise a valve **44**, which may limit flow of air in one direction. In an embodiment, the conduit **16** may be a flexible conduit, for instance a hose suitable for use in engineering vehicles.

In an embodiment, the ventilation system **10,** may further comprise a second conduit **16** and a fluid circulator **17** positioned near or at outlet **24.**

The air flow through conduit **16** may be generated by a difference in air pressure within engine compartment **12** and air pressure within the after-treatment compartment **14.** Particularly, the pressure differential in the air pressures of the engine compartment **12** and the after-treatment compartment **14** may determine the direction of the air flow through conduit **16.** Air may flow from a zone of high air pressure to a zone of low air pressure.

A lower air pressure in the engine compartment **12** relative to the after-treatment compartment **14** may generate an air flow through the conduit **16** such that air may flow from the after-treatment compartment **14** to the engine compartment **12.**

A lower pressure in the after-treatment compartment **14** relative to the engine compartment **12** may generate an air flow through the conduit **16** such that air may flow from the engine compartment **12** to the after-treatment compartment **14.**

A pressure differential may be formed by any suitable means. Particularly, a pressure differential generator may be used to generate the pressure differential.

In one embodiment, a pressure differential may be generated as a result of a difference in temperatures in the engine compartment **12** relative to the after-treatment compartment **14.** The air pressure generator may comprise the engine **20** and the after-treatment device **30.** During operation of a vehicle, heat may be generated by the engine **20** and the after-treatment device **30** to raise temperatures within the engine compartment **12** and the after-treatment compartment **14** respectively.

Increase in temperature in either the engine compartment **12** or the after-treatment compartment **14** may result in a corresponding increase in pressure in the compartments. Temperatures in the after-treatment compartment **14** may be higher than the temperatures in the engine compartment **12.** Consequently the pressure in the after-treatment compartment **14** may be higher than the pressure in the engine compartment **12.** As a result, air may flow from the after-treatment compartment **14** to the engine compartment **12.**

In another embodiment, the pressure differential may be generated by the air current flowing through the air passage **16** over port **26.** The air pressure generator may be the fluid circulator **17.** The air current produced by the fluid circulator **17** may generate a lower air pressure in the engine compartment **12** relative to the air pressure in the after-treatment compartment **14.** As a result, air may flow from the after-treatment compartment **14** to the engine compartment **12.**

The rate of air flow through the conduit **16** may be determined by the value of the difference in the pressure of the engine compartment **12** and the pressure of the after-treatment compartment **14.** For instance, the rate of air flow may be higher if the difference in the pressures are greater. The rate of air flow may be regulated by valve **44** or by equivalent devices.

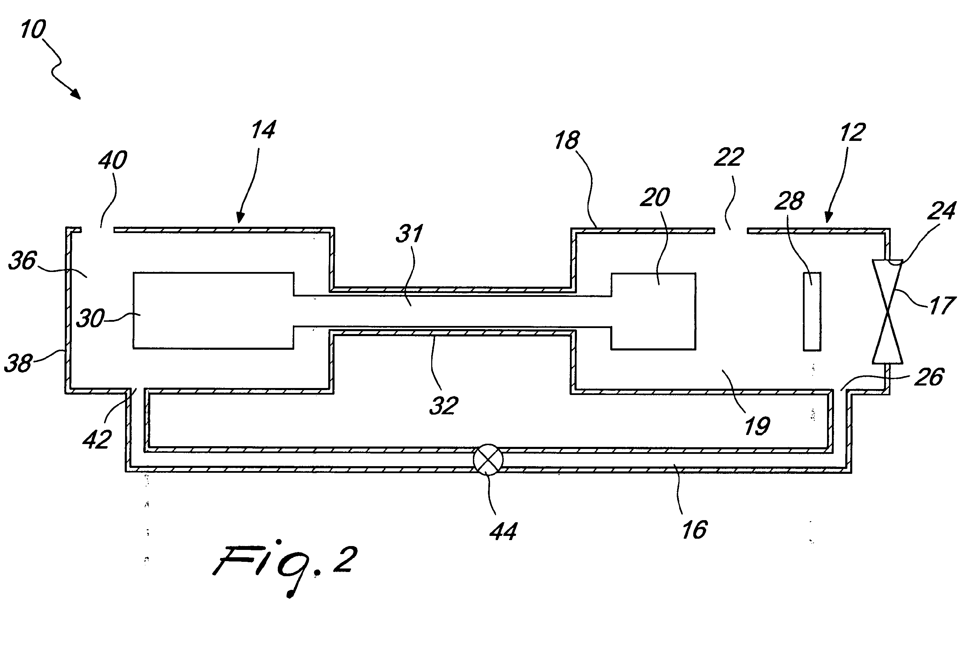

The port **26** may be positioned in proximity to the fluid circulator **17.** In an embodiment, the port **26** may be displaced from the fluid circulator **17** downstream of the air current. In another embodiment, the port **26** may be displaced from the fluid circulator **17** upstream of the air current. In reference to Fig. 2, the fluid circulator **17** may be positioned near or at the outlet **24.** In a further embodiment, a zone of low pressure may be produced over port **26** by directing the air current over port **26.**

The port **26** may be also positioned between the heat core **28** and the outlet **24** so that heated air from the after-treatment compartment may mix with the heated air passing over heat core **28** before the exiting through the outlet **24.**

With reference to Figure 2, the port **26** may also be positioned between the heat core **28** and the fluid circulator **17.**

In yet a further embodiment, a zone of high pressure may be produced over port **26** for effecting an air flow from the conduit **16** into the after-treatment compartment **14.** For instance, a distinct fan may be positioned over for port **26** for producing an air current which may be directed at the port **26** such that the air may flow into the conduit **16** through port **42** into the air chamber **36.** The air may flow over the after-treatment device **30** and exit through aperture **40.** A channel may be placed around port **26** for guiding the air flow.

In operation, the fluid circulator **17** may be activated as temperature of the engine 20 increases. The fluid circulator **17** may produce an air current flowing through the air passage **19** over heat core **38.** Heat from the heat core **38** may then be transferred to the air current. As exhaust is generated and passed into the after-treatment device **30,** the temperature within the after-treatment compartment **14** may also increase.

Air current in the air passage **16** may reduce the air pressure in a zone over port **26.** As a result of the reduced air pressure, an air flow may be generated from the conduit **16** into the air passage **19.** The flow of air through the conduit **16** may create a suction effect on air chamber **36.** Consequently, air within air chamber **36** may flow into the conduit **16.** As air heated by the after-treatment device **30** evacuates from the air chamber **36,** cooler ambient air may enter the air chamber **36** through aperture **40.** The air flowing continuously though air chamber **36** may serve to cool the after-treatment compartment **14.**

Heated air flowing from the air chamber **36** may mix with heated air in the air passage **19** before exiting outlet **24.**

Control systems may be implemented to control the air flow through the conduit **16.**

The skilled person would realise that foregoing embodiments may be modified to obtain the ventilation system of the present disclosure. Particularly two or more conduits may be used according to requirements.

### Industrial Applicability_

This disclosure describes a ventilation system **10** for an after-treatment compartment **14** wherein the ventilation system **10** may regulate the air flow through the after-treatment compartment **14.**

In the operation of an engine **20,** high levels of heat may be generated within the after-treatment compartment **14.** However, present mechanisms may not allow for sufficient cooling of the after-treatment compartment **14.** A sufficient cooling of the after-treatment compartment **14** may be achieved by using the ventilation system **10** of the present disclosure.

The industrial applicability of the ventilating system **10** and method for regulating air flow as described herein will have been readily appreciated from the foregoing discussion.

Accordingly, this disclosure includes all modifications and equivalents of the subject matter recited in the claims appended hereto as permitted by applicable law. Moreover, any combination of the above-described elements in all possible variations thereof is encompassed by the disclosure unless otherwise indicated herein.

Where technical features mentioned in any claim are followed by references signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning and range of equivalence of the claims are therefore intended to be embraced therein.

## Claims

1. A ventilation system (10) comprising:
an engine compartment (12) having a first port (26);
an after-treatment compartment (14) having a second port (42);
a conduit (16) connected between the first (26) and second ports (42); and
a pressure differential generator for forming an air pressure differential between the engine compartment (12) and the after-treatment compartment (14) to generate an air flow through the conduit (16) wherein the air pressure differential comprises of a low pressure in the engine compartment (12) relative to the after-treatment compartment 14 to generate the air flow from the after-treatment compartment (14) to the engine compartment (12) through the conduit (16).

2. The ventilation (10) system according to claim 1 wherein the air flow through the conduit effects an air flow though the after-treatment compartment.

3. The ventilation (10) system according to claim 2 wherein the air flow through the after-treatment compartment decreases the temperature of an after-treatment device (30) housed therein.

4. The ventilation system (10) according to claim 3 wherein the after-treatment device (30) is configured to treat exhaust gases from an engine (20) housed within the engine compartment (12).

5. The ventilation system (10) according to claim 1 wherein the low pressure is formed in a zone over the first port (26).

6. The ventilation system (10) according to any one of the preceding claims wherein the pressure differential generator is a fluid circulator (17) coupled to the engine compartment (12) for producing an air current to form the low pressure in the engine compartment.

7. The ventilation system (10) according to claim 6 wherein the first port (26) is displaced from the fluid circulator (17) downstream of the air current.

8. The ventilation system (10) according to claim 6 wherein the first port (26) is displaced from the fluid circulator (17) upstream of the air current.

9. The ventilation system (10) according to any one of the preceding claims further comprising a valve (44) positioned in the conduit (16).

10. The ventilation system (10) according to claim 9 wherein the valve (44) is a one-way valve.

11. The ventilation system (10) according to any one of the preceding claims wherein the fluid circulator (17) is a fan.

12. The ventilation system (10) according to any one of the preceding claims wherein the conduit (16) is a flexible conduit

13. An engineering vehicle comprising a ventilation system (10) according to any one of the claims 1 to 12.

14. A method of ventilating an after-treatment compartment (14) comprising:
connecting a conduit (16) between a first port (26) on an engine compartment (12) and a second port (42) on the after-treatment compartment (14); and
forming a pressure differential between the engine compartment (12) and the after-treatment compartment (14) to generate an air flow through the conduit (16) wherein the step of forming a pressure differential comprises forming a low pressure in the engine compartment (12) relative to the after-treatment compartment (14) to generate the air flow from the after-treatment compartment (14) to the engine compartment through the conduit (16).

15. The method according to claim 14 wherein the air flow through the conduit effects an air flow though the after-treatment compartment.

16. The method according to claim 15 wherein the air flow through the after-treatment compartment decreases the temperature of an after-treatment device (30) housed therein.

17. The method according to claim 16 wherein the after-treatment device (30) is configured to treat exhaust gases from an engine (20) housed within the engine compartment (12).

18. The method according to claim 14 wherein the step of forming a low pressure comprises producing an air current in the engine compartment (12) by a fluid circulator (17) coupled thereto.

19. The method according to claim 18 wherein the low pressure is formed in a zone over the first port (26).

20. The method according to claim 19 wherein the first port (26) is displaced from the fluid circulator (17) downstream of the air current.

## Patentansprüche

1. Ein Belüftungssystem (10), das Folgendes umfasst:
einen Motorraum (12) mit einer ersten Öffnung (26);
einen Nachhehandlungsraum (14) mit einer zweiten Öffnung (42);
eine Leitung (16), die zwischen der ersten (26) und der zweiten Öffnung (42) angeschlossen ist; und
einen Druckdifferenzgenerator zur Erzeugung eines Luftdruckunterschieds zwischen dem Motorraum (12) und dem Nachbehandlungsraum (14) zur Erzeugung einer Luftströmung durch die Leitung (16), wobei der Luftdruckunterschied einen Niederdruck im Motorraum (12) im Verhältnis zum Nachbehandlungsraum (14) umfasst, um die Luftströmung vom Nachbehandlungsraum (14) zum Motorraum (12) durch die Leitung (16) zu erzeugen.

2. Das Belüftungssystem (10) gemäß Anspruch 1, wobei der Luftstrom durch die Leitung einen Luftstrom durch den Nachbehandlungsraum bewirkt.

3. Das Belüftungssystem (10) gemäß Anspruch 2, wobei der Luftstrom durch den Nachbehandlungsraum die Temperatur einer darin befindlichen Nachbehandlungsvorrichtung (30) verringert.

4. Das Belüftungssystem (10) gemäß Anspruch 3, wobei die Nachbehandlungsvorrichtung (30) ausgebildet ist, um Abgase von einem Motor (20), der sich im Motorraum (12) befindet, zu behandeln.

5. Das Belüftungssystem (10) gemäß Anspruch 1, wobei der Niederdruck in einem Bereich über der ersten Öffnung (26) geformt ist.

6. Das Belüftungssystem (10) gemäß einem beliebigen der obigen Ansprüche, wobei der Druckdifferenzgenerator ein Fluidzirkulator (17) ist, gekoppelt mit dem Motorraum (12) zur Erzeugung eines Luftstroms, um den Niederdruck im Motorraum zu erzeugen.

7. Das Belüftungssystem (10) gemäß Anspruch 6, worin die erste Öffnung (26) vom Fluidzirkulator (17) stromabwärts vom Luftstrom versetzt ist.

8. Das Belüftungssystem (10) gemäß Anspruch 6, worin die erste Öffnung (26) vom Fluidzirkulator (17) stromaufwärts vom Luftstrom versetzt ist.

9. Das Belüftungssystem (10) gemäß einem beliebigen der obigen Ansprüche, das weiter ein in die Leitung (16) positioniertes Ventil (44) umfasst.

10. Das Belüftungssystem (10) gemäß Anspruch 9, worin das Ventil (44) ein Einwegventil ist.

11. Das Belüftungssystem (10) gemäß einem beliebigen der obigen Ansprüche, worin der Fluidzirkulator (17) ein Ventilator ist.

12. Das Belüftungssystem (10) gemäß einem beliebigen der obigen Ansprüche, worin die Leitung (16) eine biegsame Leitung ist.

13. Ein Nutzfahrzeug, das ein Belüftungssystem (10) gemäß einem beliebigen der Ansprüche 1 bis 12 umfasst.

14. Ein Verfahren zur Belüftung eines Nachbehandlungsraums (14), das Folgendes umfasst:
Anschließen einer Leitung (16) zwischen einer ersten Öffnung (26) an einem Motorraum (12) und einer zweiten Öffnung (42) am Nachbehandlungsraum (14); und
Erzeugung eines Druckunterschieds zwischen dem Motorraum (12) und dem Nachbehandlungsraum (14) zur Erzeugung eines Luftstroms durch die Leitung (16), worin der Schritt der Erzeugung eines Druckunterschieds die Erzeugung eines Niederdrucks im Motorraum (12) relativ zum Nachbehandlungsraum (14) umfasst, zur Erzeugung des Luftstroms vom Nachbehandlungsraum (14) zum Motorraum durch die Leitung (16).

15. Das Verfahren gemäß Anspruch 14, wobei der Luftstrom durch die Leitung einen Luftstrom durch den Nachbehandlungsraum bewirkt.

16. Das Verfahren gemäß Anspruch 15, wobei der Luftstrom durch den Nachbehandlungsraum die Temperatur einer darin befindlichen Nachbehandlungsvorrichtung (30) verringert.

17. Das Verfahren gemäß Anspruch 16, wobei die Nachbehandlungsvorrichtung (30) ausgebildet ist, um Abgase von einem Motor (20) zu behandeln, der sich im Motorraum (12) befindet.

18. Das Verfahren gemäß Anspruch 14, wobei der Schritt der Erzeugung eines Niederdrucks die Erzeugung eines Luftstroms im Motorraum (12) durch einen damit gekoppelten Fluidzirkulator (17) umfasst.

19. Das Verfahren gemäß Anspruch 18, wobei der Niederdruck in einem Bereich über der ersten Öffnung (26) geformt ist.

20. Das Verfahren gemäß Anspruch 19, wobei die erste Öffnung (26) vom Fluidzirkulator (17) stromabwärts vom Luftstrom versetzt ist.

## Revendications

1. Système de ventilation (10) comprenant :
un compartiment moteur (12) comportant un premier orifice (26) ;
un compartiment post-traitement (14) comportant un deuxième orifice (42) ;
une conduite (16) connectée entre les premier (26) et deuxième (42) orifices ; et
un générateur de pression différentielle pour former une pression différentielle d'air entre le compartiment moteur (12) et le compartiment post-traitement (14) pour générer un flux d'air dans la conduite (16), la pression différentielle d'air comprenant une pression basse dans le compartiment moteur (12) par rapport au compartiment post-traitement (14) afin de générer le flux d'air du compartiment post-traitement (14) vers le compartiment moteur (12) via la conduite (16).

2. Système de ventilation (10) selon la revendication 1, dans lequel le flux d'air dans la conduite provoque un flux d'air travers le compartiment post-traitement.

3. Système de ventilation (10) selon la revendication 2, dans lequel le flux d'air passant dans le compartiment post-traitement abaisse la température d'un dispositif post-traitement (30) logé dans ce dernier.

4. Système de ventilation (10) selon la revendication 3, dans lequel le dispositif post-traitement (30) est configuré pour traiter les gaz d'échappement d'un moteur (20) situé à l'intérieur du compartiment moteur (12).

5. Système de ventilation (10) selon la revendication 1, dans lequel la basse pression est formée dans une zone située sur le premier orifice (26).

6. Système de ventilation (10) selon l'une quelconque des revendications précédentes, dans lequel le générateur de pression différentielle est un circulateur de fluide (17) couplé au compartiment moteur (12) pour produire un courant d'air destinés à former la basse pression dans le compartiment moteur.

7. Système de ventilation (10) selon la revendication 6, dans lequel le premier orifice (26) est décalé par rapport au circulateur de fluide (17) en aval du courant d'air.

8. Système de ventilation (10) selon la revendication 6, dans lequel le premier orifice (26) est décalé par rapport au circulateur de fluide (17) en amont du courant d'air.

9. Système de ventilation (10) selon l'une quelconque des revendications précédentes, comprenant en outre une soupape (44) positionnée dans la conduite (16).

10. Système de ventilation (10) selon la revendication 9, dans lequel la soupape (44) est une soupape antiretour.

11. Système de ventilation (10) selon l'une quelconque des revendications précédentes, dans lequel le circulateur de fluide (17) est un ventilateur.

12. Système de ventilation (10) selon l'une quelconque des revendications précédentes, dans lequel la conduite (16) est une conduite flexible.

13. Véhicule technique comprenant un système de ventilation (10) selon l'une quelconque des revendications 1 à 12.

14. Procédé de ventilation d'un compartiment post-traitement (14) comprenant les étapes suivantes :
connecter une conduite (16) entre un premier orifice (26) présent sur un compartiment moteur (12) et un deuxième orifice (42) présent sur le compartiment post-traitement (14) ; et
former une pression différentielle entre le compartiment moteur (12) et le compartiment post-traitement (14) pour générer un flux d'air dans la conduite (16), dans lequel l'étape de formation d'une pression différentielle comprend la formation d'une pression basse dans le compartiment moteur (12) par rapport au compartiment post-traitement (14) afin de générer le flux d'air du compartiment post-traitement (14) vers le compartiment moteur via la conduite (16).

15. Procédé selon la revendication 14, dans lequel le flux d'air dans la conduite provoque un flux d'air à travers le compartiment post-traitement.

16. Procédé selon la revendication 15, dans lequel le flux d'air passant dans le compartiment post-traitement abaisse la température d'un dispositif post-traitement (30) logé dans ce dernier.

17. Procédé selon la revendication 16, dans lequel le dispositif post-traitement (30) est configuré pour traiter les gaz d'échappement d'un moteur (20) situé à l'intérieur du compartiment moteur (12).

18. Procédé selon la revendication 14, dans lequel l'étape de formation d'une basse pression comprend la production d'un courant d'air dans le compartiment moteur (12) par un circulateur de fluide (17) couplé à celui-ci.

19. Procédé selon la revendication 18, dans lequel la basse pression est formée dans une zone située sur le premier orifice (26).

20. Procédé selon la revendication 19, dans lequel le premier orifice (26) est décalé par rapport au circulateur de fluide (17) en aval du courant d'air.
